**Europäisches Patentamt**

**European Patent Office**

**Office européen des brevets**

(11) Veröffentlichungsnummer: **0 372 337**
**A2**

# (12) EUROPÄISCHE PATENTANMELDUNG

(21) Anmeldenummer: **89121823.2**

(51) Int. Cl.5: **B60N 2/44**

(22) Anmeldetag: **25.11.89**

(30) Priorität: **09.12.88 DE 3841535**

(43) Veröffentlichungstag der Anmeldung:
**13.06.90 Patentblatt 90/24**

(84) Benannte Vertragsstaaten:
**DE ES FR GB IT**

(71) Anmelder: **BAYER AG**

**D-5090 Leverkusen 1 Bayerwerk(DE)**

(72) Erfinder: **Rink, Manfred**
**Mülhauserstrasse 27**
**D-5000 Köln 60(DE)**

(54) **Kraftfahrzeugsitz.**

(57) Bei Kraftfahrzeugsitzen, bei denen zumindest die Rückenlehne (2) eine Tragstruktur (8) aus Kunststoff aufweist, wird ein Bruch dadurch vermieden, daß die das Sitzunterteil (1) und die Rückenlehne (2) verbindenden Metallbeschläge (3) Soll-Verformungsstellen (9) aufweisen, welche bei Überlastung auf Verformung bzw. Bruch eher ansprechen als die Rückenlehne (2).

FIG. 1

EP 0 372 337 A2

## Kraftfahrzeugsitz

Die Erfindung betrifft einen Kraftfahrzeugsitz, bestehend aus Sitzunterteil und Rückenlehne, wobei mit Laschen versehene Beschläge aus Metall Sitzunterteil und Rückenlehne verbinden und mindestens die Rückenlehne eine Tragstruktur aus Kunststoff aufweist.

Kraftfahrzeugsitze, welche ein Metallgestell aufweisen, sind so ausgelegt, daß sich das Metallgestell bei einer bestimmten Überlastung verformt, um den Benutzer bei Crashunfällen vor größeren Verletzungen zu schützen. Eine solche Ausgestaltung von Sitzgestellen ist nicht schwierig, weil Metallkonstruktionen vorteilhafte materialbedingte Eigenschaften aufweisen und deshalb bei Belastungen über die Elastizitätsgrenze hinaus durch gewünschte plastische Verformung reagieren.

Inzwischen finden aber auch Sitzgestelle aus thermoplastischen oder duroplastischen Kunststoffen Verwendung. Der Nachteil solcher Kunststoffkonstruktionen ist da durch bedingt, daß die in Frage kommenden, vorzugsweise glasfaserverstärkten Kunststoffe, wie Polyamid-6, Polyamid-6.6 oder Polycarbonat/ABS-Blend, einerseits einen hohen E-Modul aufweisen müssen, um eine ausreichende Steifigkeit zu erzielen, aber andererseits gerade solche Kunststoffe nur eine geringe Reißdehnung besitzen. Die Gesamtenergieaufnahme solcher Strukturen ist relativ niedrig.

Es besteht die Aufgabe, Kraftfahrzeugsitze, bei denen zumindest deren Rückenlehne eine Tragstruktur aus Kunststoff aufweist, dahingehend zu verbessern, daß bei Überlastung, insbesondere bei Crashunfällen, ein Splittern der Kunststoffstruktur vermieden wird.

Gelöst wird diese Aufgabe dadurch, daß die der Rückenlehne und/oder dem Unterteil zugeordneten Laschen der Beschläge mit mindestens einer Soll-Verformungsstelle versehen sind.

Dadurch wird erreicht, daß man die Soll-Verformungsstellen derart ausbilden kann, daß sie bei Überlastung des Sitzes, bzw. insbesondere der Rückenlehne, ansprechen, bevor die Rückenlehne bricht. Auf diese Weise läßt sich ein Bruch der Kunststoffstruktur mit dem gefürchteten Splittern vermeiden. Andererseits muß die Soll-Verformungsstelle natürlich so ausgelegt sein, daß bei normaler Belastung keine plastische Verformung auftritt.

Die Soll-Verformungsstelle läßt sich zweckmäßigerweise so ausbilden, daß das Kraftverformungsverhalten durch einen gezielten Anstieg der Kraft bei geringem Weg gekennzeichnet ist. Ab einer bestimmten Kraftaufnahme wird durch das Beulen oder Knicken der Lasche an der Soll-Verformungsstelle die Kraft unter ständiger Wegzunahme auf einem bestimmten Niveau im wesentlichen konstant gehalten.

Die Soll-Verformungsstelle läßt sich durch Sikken oder Kerben geeigneter Größe, Verringerung des Laschenquerschnittes und/oder geeigneten Abstand der Anbindungspunkte realisieren. Als Material für die Laschen sieht man einen Stahl vor, welcher ein günstiges Verhältnis von Festigkeit und plastischer Verformbarkeit aufweist, wie beispielsweise St 14 oder USt 37-2.

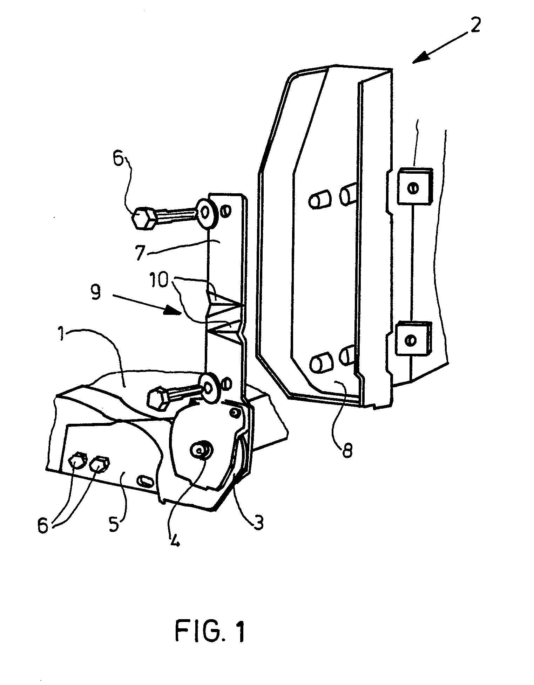

In der Zeichnung ist der neue Kraftfahrzeugsitz in einem Ausführungsbeispiel rein schematisch in Explosionsdarstellung wiedergegeben und nachstehend näher erläutert:

Der Kraftfahrzeugsitz besteht aus einem Sitzunterteil 1 und einer Rückenlehne 2, welche über Beschläge 3 (nur einer sichtbar) miteinander verbunden sind. Sowohl das Sitzunterteil 1 als auch die Rückenlehne 2 bestehen aus Kunststoff, und zwar aus Polyamid-6 mit 30 Gew.-% Glasfasergehalt, und sind im Spritzgießverfahren hergestellt. Der Beschlag 3 weist ein Gelenk 4 zum Verstellen der Rückenlehne 2 auf und besteht aus Stahl St 14. Er ist mit einer flachen blechartigen Lasche 5 am Sitzunterteil 1 mittels Schrauben 6 befestigt. Eine weitere Lasche 7 ist der Tragstruktur 8 der Rückenlehne 2 zugeordnet. Auch hier erfolgt die Verbindung mit Schrauben 6. Die Lasche 7 ist mit einer Soll-Verformungsstelle 9 versehen, welche aus zwei Sicken 10 besteht. Diese Sicken 10 erstrecken sich quer über die Lasche 7 und laufen gegensinnig aus. Wird die Rückenlehne in Richtung nach hinten druckbelastet, wird die obere Sikke 10 gedehnt und die untere gestaucht, wobei Energie vernichtet wird.

## Ansprüche

Kraftfahrzeugsitz, bestehend aus einem Sitzunterteil (1) und Rückenlehne (2), wobei mit Laschen (5, 7) versehene Beschläge (3) aus Metall Sitzunterteil (1) und Rückenlehne (2) verbinden und mindestens die Rückenlehne (2) eine Tragstruktur (8) aus Kunststoff aufweist, dadurch gekennzeichnet, daß die der Rückenlehne (2) und/oder dem Sitzunterteil (1) zugeordneten Laschen (5, 7) der Beschläge (3) mit mindestens einer Soll-Verformungsstelle (9) versehen sind.

FIG. 1